# EUROPEAN PATENT SPECIFICATION

(11) **EP 3 563 226 B1**
(45) Date of publication and mention of the grant of the patent: **13.12.2023**
(21) Application number: 16826661.7
(22) Date of filing: 29.12.2016
(51) Int. Cl.: B41J 3/36

(54) **PRINTER ACTING AS HOST FOR DEVICE PRINTERS/SCANNERS**
DRUCKER ALS HOST FÜR VORRICHTUNGSDRUCKER/-SCANNER
IMPRIMANTE FAISANT OFFICE D'HÔTE POUR DES IMPRIMANTES/SCANNERS DE DISPOSITIF

(43) Date of publication of application: 06.11.2019
(73) Proprietor: Avery Dennison Retail Information Services LLC, Mentor, OH 44060 (US)
(72) Inventor: BEST, David Eric, Miamisburg, Ohio 45342 (US)
(74) Representative: Müller-Boré & Partner Patentanwälte PartG mbB
(86) International application number: PCT/US2016/069174
(87) International publication number: WO 2018/125131

(56) References cited:
- US-A1- 2006 221 363
- US-A1- 2014 370 807

## Description

### BACKGROUND

The present invention relates generally to food freshness barcode printers or smart printers acting as a host to a handheld printer/scanner device. More particularly, the present disclosure relates to a process of pairing a handheld printer/scanner device with a barcode printer acting as the host that will enhance the functionality of the host printer.

A barcode printer is a computer peripheral for printing barcode labels or tags that can be attached to, or printed directly on, physical objects. Barcode printers are commonly used to label cartons before shipment, or to label retail items with UPCs or EANs. The most common barcode printers employ one of two different printing technologies. Direct thermal printers use a print head to generate heat that causes a chemical reaction in specially designed paper that turns the paper black. Thermal transfer printers also use heat, but instead of reacting the paper, the heat melts a waxy or resin substance on a ribbon that runs over the label or tag material. The heat transfers ink from the ribbon to the paper.

Barcode printers are designed for different markets. Industrial barcode printers are used in large warehouses, manufacturing facilities, and food facilities. They have large paper capacities, operate faster and have a longer service life. For retail and office environments, desktop barcode printers are most common.

Furthermore, in traditional food preparation and service areas, or other suitable areas, food freshness barcode printers are installed. In these areas, the non-technical user is required to complete tasks such as receiving, breaking down inner packs, putting away ingredients, and maintaining information required for Food Safety. Thus, as the requirements for information supporting supply chain visibility initiatives and Food Service traceability requirements increase, it is desirable to expand the role of a food freshness barcode printer in store to support these goals.

US 2014/370807 relates to a process for enabling a generic host to receive data to print from a hand-held scanner.

Thus, there exists a need for a food freshness barcode printer or smart printer utilized for printing freshness labels to enhance the operations of a handheld printer/scanner device, such as by enabling the host printer to receive the barcode scan of a case label and retain the information for future label printing use. The present invention discloses a method of pairing the handheld printer/scanner device with a barcode printer acting as a host that will enhance the functionality of the host printer.

### SUMMARY

The following presents a simplified summary in order to provide a basic understanding of some aspects of the disclosed innovation. This summary is not an extensive overview, and it is not intended to identify key/critical elements or to delineate the scope thereof. Its sole purpose is to present some concepts in a simplified form as a prelude to the more detailed description that is presented later.

The subject matter disclosed and claimed herein, in one aspect thereof, comprises a method of pairing a handheld printer/scanner device with a barcode printer acting as the host. The pairing will further enhance the functionality of the host barcode printer. Specifically, the pairing process is initiated when a printer process that requires a handheld printer/scanner device is initiated. For exemplary purposes this description will use the specific application of receiving food in a restaurant, although the method can be utilized with other applications as is known in the art.

In a preferred embodiment, the method enables a handheld printer/scanner device to print to a host barcode printer, such as food freshness labels and other similar labels. The method also enables the host barcode printer to receive a barcode scan of the case label of received food items or other items and retain information from the barcode scan for future printing of food freshness labels and other labels as is known in the art.

To the accomplishment of the foregoing and related ends, certain illustrative aspects of the disclosed innovation are described herein in connection with the following description and the annexed drawings. These aspects are indicative, however, of but a few of the various ways in which the principles disclosed herein can be employed and is intended to include all such aspects and their equivalents. Other advantages and novel features will become apparent from the following detailed description when considered in conjunction with the drawings.

### BRIEF DESCRIPTION OF THE DRAWINGS

FIG. 1 illustrates a front perspective view of a barcode printer in accordance with the disclosed architecture.
FIG. 2 illustrates a rear perspective view of a handheld printer/scanner device in accordance with the disclosed architecture.
FIG. 3 illustrates a top plan view of the barcode printer and handheld printer/scanner device in proximity to each other in accordance with the disclosed architecture.
FIG. 4 illustrates a flowchart of the barcode printer in accordance with the disclosed architecture.
FIG. 5 illustrates a flowchart of the handheld printer/scanner device in accordance with the disclosed architecture.
FIG. 6 illustrates a front plan view of a case label in accordance with the disclosed architecture.
FIG. 7 illustrates a flowchart of the process for pairing the barcode printer and the handheld printer/scanner in accordance with the disclosed architecture.
FIG. 8 illustrates a flowchart of the receiving process in accordance with the disclosed architecture.

### DETAILED DESCRIPTION

The innovation is now described with reference to the drawings, wherein like reference numerals are used to refer to like elements throughout. In the following description, for purposes of explanation, numerous specific details are set forth in order to provide a thorough understanding thereof. It may be evident, however, that the innovation can be practiced without these specific details. In other instances, well-known structures and devices are shown in block diagram form in order to facilitate a description thereof.

A method of pairing a handheld printer/scanner device with a barcode printer acting as the host. The pairing will further enhance the functionality of the host barcode printer. Specifically, the method enables a handheld printer/scanner device to print to a host barcode printer, and also enables the host barcode printer to receive a barcode scan of the case label and retain information from the barcode scan for future printing of labels.

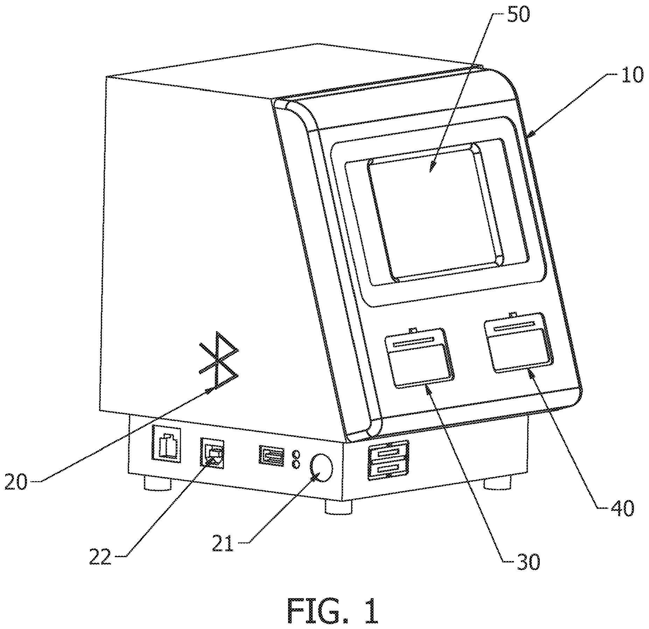

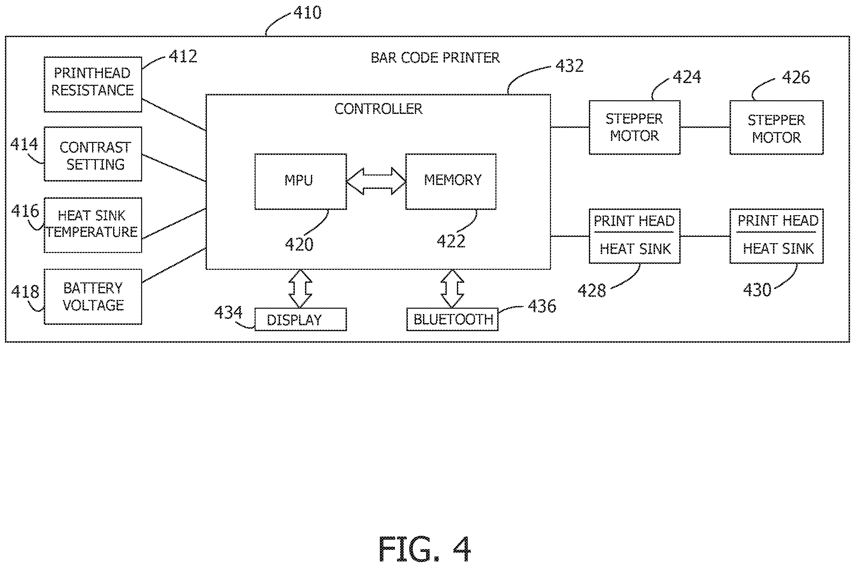

Referring initially to the drawings, FIG. 1 illustrates a barcode printer 10 in accordance with the present invention, however any suitable barcode printer can be used as is known in the art. The barcode printer 10 comprises a thermal print head (shown in FIG. 4, 428 and 430) for printing barcodes and alphanumeric information on a web of record members such as tags, labels or the like. The supply of the web of record members may be of the direct printing type such that the record members include paper coated with a thermally responsive material. Alternatively, the supply used with the barcode printer 10 may be of the transfer type wherein a carbon ribbon is heat activated by the print head so as to print on the record members. The print head is strobed to control the amount of energy applied thereto for printing. More particularly, current is applied to the print head during a strobe time in order to print one line on a record member.

The barcode printer 10 also includes a stepper motor (shown in FIG. 4, 424 and 426) or the like that is responsive to a periodic drive signal, the period of which is defined by the time between the leading edges of consecutive or adjacent pulses of the drive signal. The stepper motor is responsive to the drive signal to advance the web of record members past the print head for printing. The drive signal controls the speed of the stepper motor which in turn controls the print speed of the barcode printer 10.

A controller (shown in FIG. 4, 432) includes a microprocessor 420 or the like which operates in accordance with software routines stored in a memory so as to control the operations of the barcode printer 10. A number of sensors, monitors, detectors or the like such as depicted at 412, 414, 416 and 418 (see FIG. 4), monitor operating conditions of the barcode printer 10 including the resistance of the print head, the contrast setting of the barcode printer, the temperature of a heat sink on which the print head is mounted and the voltage of a battery powering the barcode printer 10. The measured values of the print head resistance, contrast setting, heat sink temperature, battery voltage, as well as other operating variables if desired, are utilized by the microprocessor when implementing print speed control.

Furthermore, the barcode printer 10 would typically be located in the foodservice work area, but could be situated in any suitable area as is known in the art. The barcode printer 10 is a Bluetooth compliant device 20 which further comprises at least one 802.11 a/b/e/g antenna at 21 and at least one USB device port 22, however any suitable number of antenna and USB device ports can be utilized as is known in the art, depending on the wants and needs of a user. The barcode printer 10 also comprises at least two station embedded printers 30 and 40, however any suitable number of station embedded printers can be utilized as is known in the art, depending on the wants and needs of a user. These station embedded printers 30 and 40 can run different supply sizes. Finally, the barcode printer 10 comprises a user display 50 or monitor.

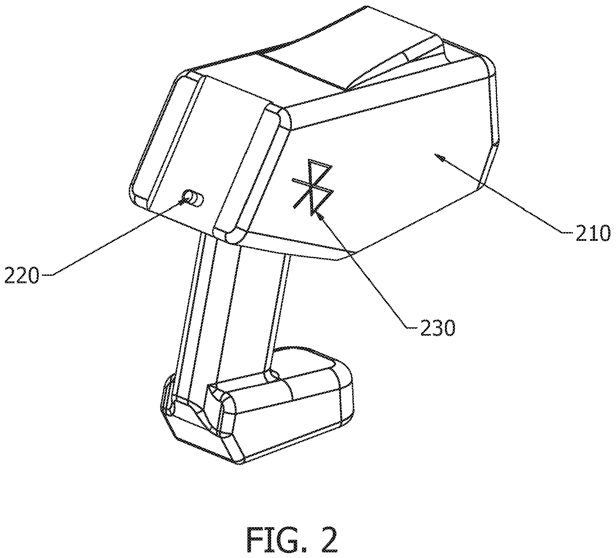

Generally referring to FIG. 2, the disclosed food freshness barcode printer, or any other suitable barcode printer or smart printer would be paired with a handheld printer/scanner device 210. The handheld printer/scanner device 210 is Bluetooth enabled shown at 230 and comprises a power switch 220, as well as any other necessary mechanics and functionality as is known in the art.

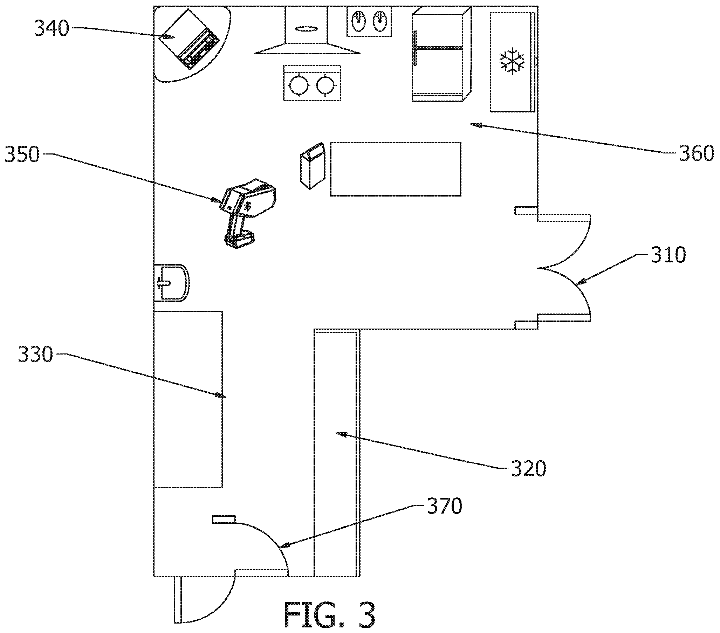

FIG. 3 illustrates a typical layout of a food preparation area for a food service facility where both printers 10 and 210 would be located. As shown in FIG. 3, the receiving door 310 is where both cold and dry storage items are processed. Within the dry storage area, are shelving units 320 for dry storage and a work station 330. At 340, another work station is shown where the food freshness host printer 10 would be located. Cold storage is shown at 360 and swinging doors 370 lead to the customer service area. Further, the handheld portable printer/scanner device 210 is shown at 350. The handheld portable printer/scanner device 210 is paired with the food freshness host printer 10, which allows the handheld portable printer/scanner device 210 to print from the food freshness host printer 10, wherever the food freshness host printer 10 is located within the food service facility.

FIG. 4 illustrates the barcode printer 410 (also shown in FIG. 1 as 10) which comprises a thermal print head 412 for printing barcodes and alphanumeric information. The print head resistance 412 is strobed or heated to control the amount of energy applied thereto for printing. This energy will be varied based upon the heat of the print as determined by the heat sink depicted at 416. The contrast setting, 414, will also impact the length of the strobe. The barcode printer 410 also includes two stepper motors 424 and 426. The stepper motor 424 controlled by MPU 420 advances the web of record members past the print head 428 for printing. In addition, stepper motor 426 controlled by MPU 420 advances the web of record members past the print head 430 for printing.

The barcode printer 410 also includes a controller 432 which includes a microprocessor 420 or the like which operates in accordance with software routines stored in a memory 422 so as to control the operations of the barcode printer 410. The software of the present invention is typically customizable per a user's request which allows the software to be easily tailored around a user's requirement.

A number of sensors, monitors, detectors or the like such as depicted at 412, 414, 416, and 418, monitor operating conditions of the barcode printer 410 including the resistance of the print heads 428 and 430, the contrast setting of the barcode printer, the temperature of the heat sink at 428 and 430 and the voltage of a battery powering the barcode printer 410. The measured values of the print head resistance, contrast setting, heat sink temperature, battery voltage, as well as other operating variables if desired, are utilized by the microprocessor 420 when implementing print speed control.

Furthermore, the barcode printer 410 is a Bluetooth compliant device 436 which further comprises at least one 802.11 a/b/e/g antenna and at least one USB device port. The barcode printer 410 also comprises a user display 434 or monitor.

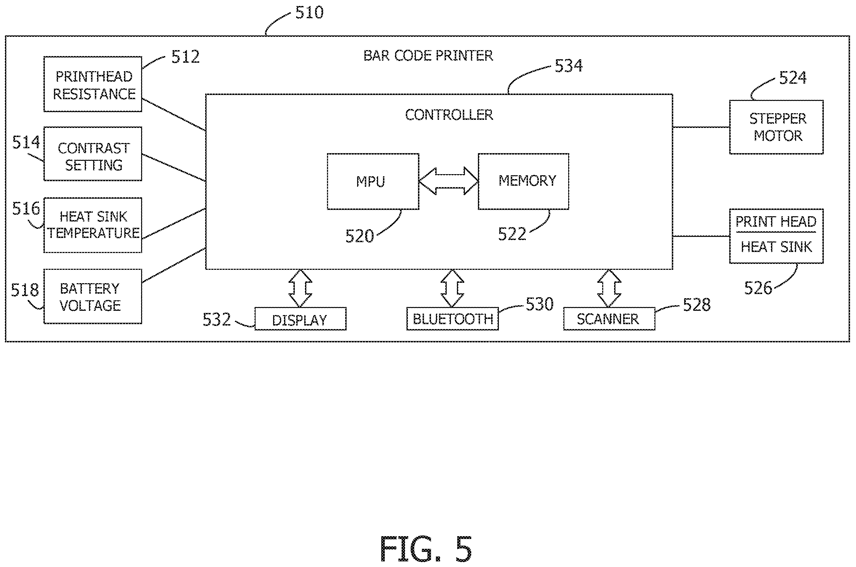

FIG. 5 illustrates the control board of barcode printer 510 (also shown in FIG. 2 as 210). This control board has minor variances to the control board for printer 410, for example printer 510 contains one printer station instead of two. The printer 510 also comprises a thermal printer head 526 for printing barcodes and alphanumeric information. The printer head 526 is strobed or heated to control the amount of energy applied thereto for printing. This energy will be varied based upon the heat of the print as determined by the heat sink depicted in 526. The contrast setting, 514, will also impact the length of the strobe.

The barcode printer 510 also includes a stepper motor 524. The stepper motor 524 controlled by MPU 520 advances the web of record members past the print head 526 for printing. A controller 534 includes a microprocessor 520 or the like which operates in accordance with software routines stored in a memory 522 so as to control the operations of the barcode printer 510. The software of the present invention is typically customizable per a customer's request which allows the software to be easily tailored around a customer's requirements.

A number of sensors, monitors, detectors or the like such as depicted at 512, 514, 516, and 518, monitor operating conditions of the barcode printer 510 including the resistance of the print head 526, the contrast setting of the barcode printer, the temperature of the heat sink in 526 and the voltage of a battery powering the barcode printer 510. The measured values of the printer head resistance, contrast setting, heat sink temperature, battery voltage, as well as other operating variables if desired, are utilized by the microprocessor 520 when implementing print speed control.

Furthermore, the barcode printer 510 is a Bluetooth compliant device 530 which further comprises at least one 802.11 a/b/e/g antenna and at least one USB device port. The barcode printer 510 also comprises a user display 532 or monitor, and a scanner 528.

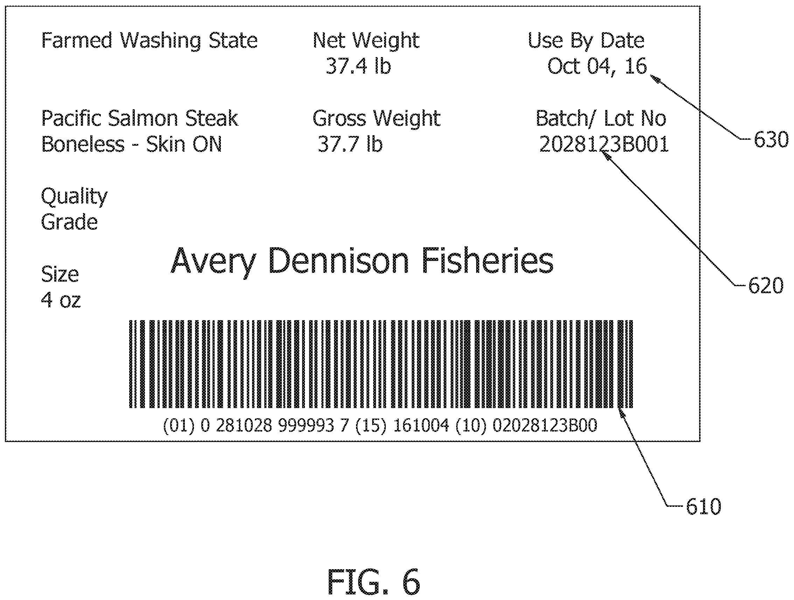

An example case label for use with the printers 10 (also 410) and 210 (also 510) is shown in FIG. 6. Handheld printer/scanner device 210 scans the barcode shown at 610 on the label. This barcode is encoded with a unique identification identifying the manufacturer, the item number, the lot number, and the best by date. The lot number is also indicated in the human readable number shown at 620 and the best by date is indicated in the human readable number shown at 630. Handheld printer/scanner device 210 sends this information back to the barcode host printer 10 which is running a specific application. The application extracts the lot number and best by date from barcode 610. This lot number and best by date can then be printed on food freshness labels when food items are removed from either cold storage or dry storage.

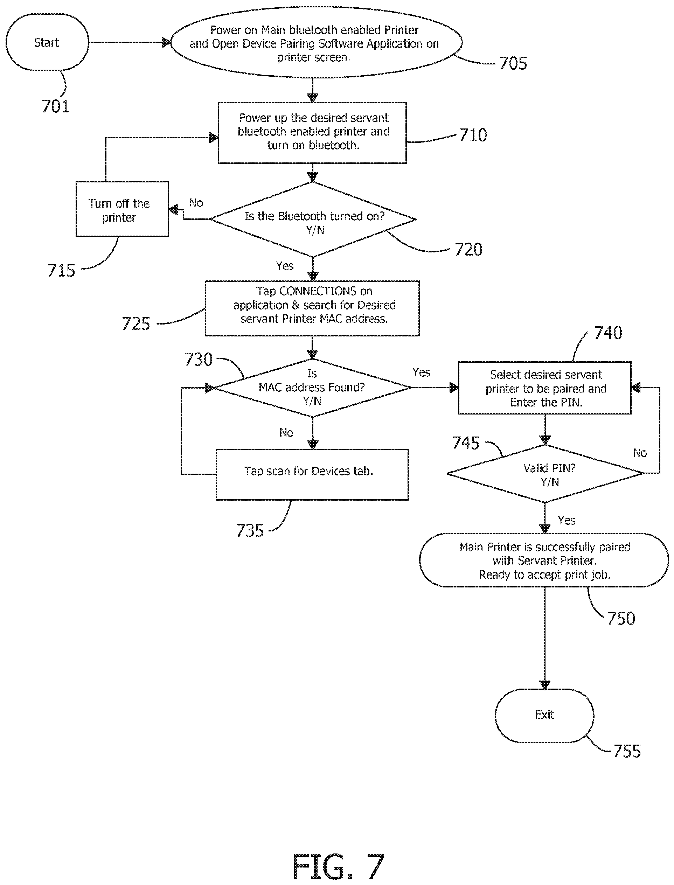

However, before the Bluetooth printer can print from the food freshness printer the device must be paired with the printer. FIG. 7 outlines the process required for pairing the devices. At 701, the process is entered. At 705, the printer 10 is powered on and the application selection screen is presented on display 50, the application that utilizes device pairing must then be selected and started. In this case, this application is the receiving process for food service application. At 710, the handheld printer/scanner device 210 is powered on. The user then verifies that the Bluetooth is turned on at 720. If the Bluetooth is not enabled, the Bluetooth is enabled and the handheld printer/scanner device 210 is powered down at 715 and the process returns to 710.

If Bluetooth is enabled, then at 725 a user taps the command CONNECTIONS on printer 10 and searches for the desired handheld printer/scanner device 210. At 730, it is determined if the printer MAC address is found. If no, then at 735 the user taps the "Scan for Devices" tab and the process returns to 730. If yes, then at 740 the desired handheld printer/scanner device 210 (servant printer) is selected to be paired and the PIN code is entered. If the PIN code is valid, then at 745 the desired handheld printer/scanner device 210 is successfully paired and ready to print and the process is exited at 755. If the PIN code is not valid, then at 745 the process returns to 740 for the user to re-enter a correct PIN code.

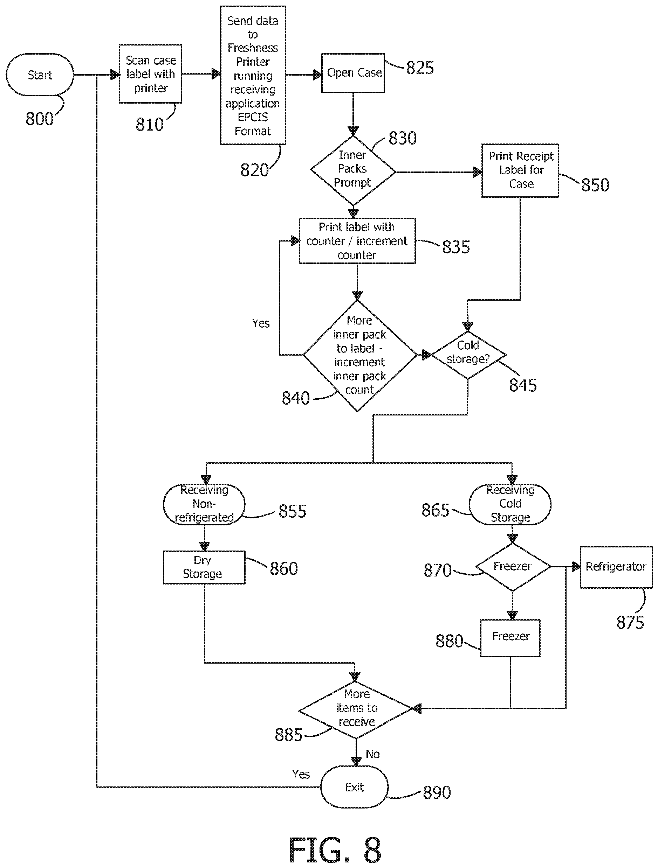

Once the pairing is complete between barcode host printer 10 and handheld printer/scanner device 210, the receiving application shown in the flow chart in FIG. 8 is enabled to complete the receiving operations. When cases are received through the receiving door, the barcode scanner on the handheld printer/scanner device 210 is used to scan the case label as indicated in FIG. 8. As stated *supra,* an example case label is shown in FIG. 6. Handheld printer/scanner device 210 sends this information back to barcode host printer 10 which is running a specific application. The application extracts the lot code and best by date from barcode 610. This lot code and best by date can be printed on food freshness labels when food items are removed from either cold storage or dry storage.

As shown in FIG. 8, the receiving process can be completed after the printer 10 and 210 are paired. Entering the process at 800, a user scans the case label at 810 with the handheld printer/scanner device 210. At 820, the scanned data is sent to the barcode host printer 10 where it can be processed by an application program to obtain the Vendor, Item Number, Lot or Serial Number, and Best By date. This data can be used by barcode host printer 10 when printing labels for the transformation step of food prep to identify food items' lot numbers or serial numbers and use by dates.

At 825 the case is opened. The application on host barcode printer 10 will prompt for inner packs at 830. If yes, the process proceeds to 835 to print and apply a received label with the key data elements and a barcode that can be scanned when the item is removed from food storage for food prep. This label has an incrementing count for each inner pack. At 840, the user determines if more inner pack labels are needed and the process continues until the carton is empty. If at 830 there were no inner packs for the carton, then the process continues to 850 where the handheld printer/scanner device 210 prints a received label for the carton containing the key data elements needed for the critical tracking event. Then, both the no branches of 840 and 850 proceed toward putting the item away.

At 845, the need for cold storage is determined by the user or alternately the application program on host barcode printer 10 could contain the proper storage method of the received item. If cold storage is not needed, the process continues to 855 where the inner pack or case is received and then transferred to dry storage at 860. The process then continues to prompt for receiving another case at 885. If yes, then the process returns to 810 and starts over, and if there are no more cases the process exits at 890.

If at 845 it is determined that the user is receiving a cold storage item, the process continues to 865. Then at 870, it is determined if the cold storage item should be stored frozen or under refrigeration. If the cold storage item should be stored frozen, the process continues to 880 and the item is placed in the freezer. If the cold storage item should be stored under refrigeration, the process continues to 875 and the item is placed in the refrigerator. Then, the process continues to 885 to determine if more cases are to be received. If yes, the process continues to 810 and starts over, and if no the process continues to 890 and exits.

What has been described above includes examples of the claimed subject matter. It is, of course, not possible to describe every conceivable combination of components or methodologies for purposes of describing the claimed subject matter, but one of ordinary skill in the art may recognize that many further combinations and permutations of the claimed subject matter are possible. Accordingly, the claimed subject matter is intended to embrace all such alterations, modifications and variations that fall within the scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

## Claims

1. A process for enabling a host barcode printer to receive data to print from a handheld printer/scanner, receive a barcode scan and retain information from the barcode scan for future printing, comprising:
pairing a host barcode printer with a handheld printer/scanner device, comprising the steps of:
powering on the host barcode printer, the host barcode printer comprising at least one USB device port;
starting a receiving process for food service application that utilizes device pairing on the host barcode printer;
powering on the handheld printer/scanner device;
enabling Bluetooth connectivity on both the host barcode printer and the handheld printer/scanner device, wherein enabling Bluetooth connectivity on the handheld printer/scanner device comprises:
verifying whether Bluetooth is turned on for the handheld printer/scanner device;
when Bluetooth is not turned on for the handheld printer/scanner device, turning off the handheld printer/scanner device, powering up the handheld printer/scanner device and turning on Bluetooth;
enabling connections on the host barcode printer to search for the handheld printer/scanner device;
checking to see if a MAC address of the handheld printer/scanner device is found;
if the MAC address has been found, then selecting the handheld printer/scanner device to be paired;
entering a PIN code; and
if the PIN code is valid, then the handheld printer/scanner device is successfully paired and ready to print and the process is exited; the method further comprising:
completing the receiving process after the host barcode printer is paired with the handheld printer/scanner device, comprising the steps of:
scanning a case label with the handheld printer/scanner device;
sending scanned data to the host barcode printer where it is processed by an application program; and
printing labels using the scanned data by the host barcode printer, wherein the host barcode printer comprises a printer head that is strobed to control the amount of energy applied thereto for printing, wherein the amount of energy varies based upon the heat required for the printing as determined by a heat sink associated with the host barcode printer.

2. The process of claim 1, further comprising: once the pairing is complete between the host barcode printer and the handheld printer/scanner device, enabling the receiving application to complete receiving operations.

3. The process of claim 1, wherein when cases are received through a receiving door, the handheld printer/scanner device is used to scan the case label.

4. The process of claim 3, wherein the handheld printer/scanner device sends information from the case label back to the host barcode printer which is running an application.

5. The process of claim 4, wherein the application extracts the lot code and best by date from the barcode;
wherein the lot code and best by date may be printed on food freshness labels when food items are removed from either cold storage or dry storage.

6. The receiving process of claim 1, further comprising:
opening a case;
prompting the host barcode printer for inner pack labels;
if yes, then proceeding to print and apply labels with key data elements and a barcode that can be scanned when the item is removed from food storage for food prep;
determining if more inner pack labels are needed; and
continuing the process until the carton is empty.

7. The receiving process of claim 6, further comprising: if there are no inner packs for the carton, then printing a received label for the carton containing the key data elements needed for the critical tracking event.

8. The receiving process of claim 1, further comprising: determining need for cold storage to determine the proper storage method of the received item;
wherein determining may be done by a user or by the application program on the host barcode printer.

9. The receiving process of claim 8, wherein if the received item does not belong in cold storage, placing the inner pack or case in dry storage.

10. The receiving process of claim 9, further comprising: prompting a user to receive another case.

11. The receiving process of claim 10, wherein if there's another case, then the process returns to the beginning and starts over.

12. The receiving process of claim 10, wherein if there's not another case, then the process exits.

13. The receiving process of claim 12, wherein if receiving a cold storage item, determining if the received items are stored under refrigeration or frozen,
wherein the process may continue determining if more cases are to be received.

## Patentansprüche

1. Verfahren zum Freigeben eines Host-Barcodedruckers, um zu druckende Daten von einem tragbaren Drucker/Scanner zu empfangen, einen Barcodescan zu empfangen und Informationen von dem Barcodescan für zukünftiges Drucken zu behalten, umfassend:
Koppeln eines Host-Barcodedruckers mit einer tragbaren Drucker/Scanner-Vorrichtung, umfassend die Schritte:
Einschalten des Host-Barcodedruckers, wobei der Host-Barcodedrucker zumindest einen USB-Vorrichtungsanschluss aufweist;
Starten eines Empfangsverfahrenes für eine Lebensmittelserviceanwendung, die eine Vorrichtungskopplung an dem Host-Barcodedrucker nutzt;
Einschalten der tragbaren Drucker/Scanner-Vorrichtung;
Freigeben von Bluetooth-Verbindbarkeit sowohl an dem Host-Barcodedrucker als auch an der tragbaren Drucker/Scanner-Vorrichtung, wobei das Freigeben der Bluetooth-Verbindbarkeit an der tragbaren Drucker/Scanner-Vorrichtung umfasst:
Überprüfen, ob Bluetooth für die tragbare Drucker/Scanner-Vorrichtung aktiviert ist;
wenn Bluetooth für die tragbare Drucker/Scanner-Vorrichtung nicht eingeschaltet ist, Ausschalten der tragbaren Drucker/Scanner-Vorrichtung, Einschalten der tragbaren Drucker/Scanner-Vorrichtung und Einschalten von Bluetooth;
Freigeben von Verbindungen an dem Host-Barcodedrucker zur Suche nach der tragbaren Drucker/Scanner-Vorrichtung;
Prüfen, ob eine MAC-Adresse der tragbaren Drucker/Scanner-Vorrichtung gefunden wird;
wenn die MAC-Adresse gefunden wurde, Auswählen der zu koppelnden tragbaren Drucker/Scanner-Vorrichtung;
Eingeben eines PIN-Codes; und
wenn der PIN-Code gültig ist, wird die tragbare Drucker/Scanner-Vorrichtung erfolgreich gekoppelt und ist bereit zum Drucken und das Verfahren wird verlassen; wobei das Verfahren ferner umfasst:
Abschließen des Empfangsverfahrenes, nachdem der Host-Barcodedrucker mit der tragbaren Drucker/Scanner-Vorrichtung gekoppelt ist, umfassend die Schritte:
Scannen eines Kistenetiketts mit der tragbaren Drucker/Scanner-Vorrichtung;
Senden der gescannten Daten an den Host-Barcodedrucker, wo er von einem Anwendungsprogramm verarbeitet wird; und
Drucken von Etiketten unter Verwendung der gescannten Daten durch den Host-Barcodedrucker, wobei der Host-Barcodedrucker einen Druckerkopf aufweist, der zum Steuern der ihm zum Drucken zugeführten Energiemenge angesteuert wird, wobei die Energiemenge anhand der für das Drucken erforderlichen Wärme variiert, die durch einen dem Host-Barcodedrucker zugeordneten Kühlkörper bestimmt wird.

2. Verfahren nach Anspruch 1, ferner umfassend: nachdem das Koppeln zwischen dem Host-Barcodedrucker und der tragbaren Drucker/Scanner-Vorrichtung abgeschlossen ist, Freigeben der empfangenden Anwendung, Empfangsvorgänge abzuschließen.

3. Verfahren nach Anspruch 1, wobei, wenn Kisten durch eine Empfangstür empfangen werden, die tragbare Drucker/Scanner-Vorrichtung zum Scannen des Kistenetiketts verwendet wird.

4. Verfahren nach Anspruch 3, wobei die tragbare Drucker/Scanner-Vorrichtung Informationen von dem Kistenetikett zurück an den Host-Barcodedrucker sendet, auf dem eine Anwendung läuft.

5. Verfahren nach Anspruch 4, wobei die Anwendung den Chargencode und das Mindesthaltbarkeitsdatum aus dem Barcode extrahiert;
wobei der Chargencode und das Mindesthaltbarkeitsdatum auf die Frischeetiketten von Lebensmitteln gedruckt werden können, wenn Lebensmittel aus dem Kühl- oder Trockenlager entnommen werden.

6. Empfangsverfahren nach Anspruch 1, ferner umfassend:
Öffnen einer Kiste;
Veranlassen des Host-Barcodedruckers, Etiketten für Innenverpackungen zu drucken;
falls ja, dann Fortfahren mit dem Drucken und Anbringen der Etiketten mit wichtigen Datenelementen und einem Barcode, die gescannt werden können, wenn der Artikel für die Lebensmittelzubereitung aus dem Lebensmittellager genommen wird;
Bestimmen, ob mehr Innenverpackungsetiketten benötigt werden; und
Fortsetzen des Verfahrens, bis der Karton leer ist.

7. Empfangsverfahren nach Anspruch 6, ferner umfassend: falls es keine Innenverpackungen für den Karton gibt, dann Drucken eines empfangenen Etiketts für den Karton, das die für das kritische Verfolgungsereignis benötigten wichtigen Datenelemente enthält.

8. Empfangsverfahren nach Anspruch 1, ferner umfassend: Bestimmen des Bedarfs an Kühllagerung, um das geeignete Lagerungsverfahren für den empfangenen Artikel zu bestimmen;
wobei das Bestimmen durch einen Benutzer oder durch das Anwendungsprogramm auf dem Host-Barcodedrucker erfolgen kann.

9. Empfangsverfahren nach Anspruch 8, wobei, falls der empfangene Artikel nicht in eine Kühllagerung gehört, Platzieren der Innenverpackung oder der Kiste in einem Trockenlager.

10. Empfangsverfahren nach Anspruch 9, ferner umfassend: Veranlassen eines Benutzers, eine weitere Kiste zu empfangen.

11. Empfangsverfahren nach Anspruch 10, wobei, falls es eine weitere Kiste gibt, das Verfahren zum Beginn zurückkehrt und von vorne beginnt.

12. Empfangsverfahren nach Anspruch 10, wobei das Verfahren beendet wird, wenn es keine weitere Kiste gibt.

13. Empfangsverfahren nach Anspruch 12, wobei, falls ein Kühllagerungsartikel empfangen wird, Bestimmen, ob die empfangenen Artikel gekühlt oder gefroren gelagert werden,
wobei das Verfahren fortgesetzt werden kann, um zu bestimmen, ob weitere Kisten empfangen werden sollen.

## Revendications

1. Processus pour permettre à une imprimante de code à barres hôte de recevoir des données à imprimer d'un dispositif d'impression/de balayage portatif, de recevoir un balayage de code à barres et de retenir des informations provenant du balayage de code à barres pour une impression future, comprenant :
l'appariement d'une imprimante de code à barres hôte avec un dispositif d'impression/de balayage portatif, comprenant les étapes :
de mise en marche de l'imprimante de code à barres hôte, l'imprimante de code à barres hôte comprenant au moins un port de dispositif USB ;
de lancement d'un processus de réception pour application de service alimentaire qui utilise l'appariement de dispositif sur l'imprimante de code à barres hôte ;
de mise en marche du dispositif d'impression/de balayage portatif ;
d'autorisation de la connectivité Bluetooth sur à la fois l'imprimante de code à barres hôte et le dispositif d'impression/de balayage hôte, dans lequel l'autorisation de la connectivité Bluetooth sur le dispositif d'impression/de balayage portatif comprend :
la vérification pour savoir si le Bluetooth est activé pour le dispositif d'impression/de balayage portatif ;
lorsque le Bluetooth n'est pas activé sur le dispositif d'impression/de balayage portatif, la désactivation du dispositif d'impression/de balayage portatif, la mise sous tension du dispositif d'impression/de balayage portatif et l'activation du Bluetooth ;
d'autorisation de connexions sur l'imprimante de code à barres hôte pour rechercher le dispositif d'impression/de balayage hôte ;
de vérification pour voir si une adresse MAC du dispositif d'impression/de balayage portatif est trouvée ;
si l'adresse MAC a été trouvée, alors de sélection du dispositif d'impression/de balayage portatif à apparier ;
de saisie d'un code PIN ; et
si le code PIN est valide, alors le dispositif d'impression/de balayage portatif est appairé avec succès et est prêt pour l'impression et le processus est terminé ; le procédé comprenant en outre :
l'achèvement du processus de réception après que l'imprimante de code à barres hôte a été appairée avec le dispositif d'impression/de balayage hôte, comprenant les étapes :
de balayage d'une étiquette de boîtier avec le dispositif d'impression/de balayage portatif ;
d'envoi de données balayées à l'imprimante de code à barres hôte là où le traitement par un programme d'application a lieu ; et
d'impression d'étiquettes en utilisant les données balayées par l'imprimante de code à barres hôte, dans lequel l'imprimante de code à barres hôte comprend une tête d'impression qui est flashée pour commander la quantité d'énergie appliquée sur celle-ci pour l'impression, dans lequel la quantité d'énergie varie sur la base de la tête requise pour l'impression ainsi que cela est déterminé par un dissipateur thermique associé à l'imprimante de code à barres hôte.

2. Processus selon la revendication 1, comprenant en outre : une fois que l'appariement est achevé entre l'imprimante de code à barres hôte et le dispositif d'impression/de balayage portatif, l'autorisation de l'application de réception à achever des opérations de réception.

3. Processus selon la revendication 1, dans lequel, lorsque des boîtiers sont reçus par une porte de réception, le dispositif d'impression/de balayage hôte est utilisé pour balayer l'étiquette de boîtier.

4. Processus selon la revendication 3, dans lequel le dispositif d'impression/de balayage portatif envoie des informations depuis l'étiquette de boîtier à l'imprimante de code à barres hôte qui exécute une application.

5. Processus selon la revendication 4, dans lequel l'application extrait du code à barres le code de lot et la date limite de consommation optimale ;
dans lequel le code de lot et la date limite de consommation optimale peuvent être imprimés sur des étiquettes de fraîcheur d'aliment lorsque les articles alimentaires sont retirés soit de l'entreposage frigorifique soit de l'entreposage à sec.

6. Processus de réception selon la revendication 1, comprenant en outre :
l'ouverture d'un boîtier ;
la demande d'étiquettes intérieures d'emballage à l'imprimante de code à barres hôte ;
dans ce cas, la mise en oeuvre alors de l'impression et de l'application d'étiquettes avec des éléments de données clés et un code à barres qui peuvent être balayés lorsque l'article est retiré d'un entreposage d'aliments pour la préparation d'aliments ;
la détermination de savoir si une plus grande quantité d'étiquettes d'emballage intérieur sont requises ; et
la poursuite du processus jusqu'à ce que le carton soit vide.

7. Processus de réception selon la revendication 6, comprenant en outre : en l'absence d'emballages intérieurs pour le carton, l'impression alors d'une étiquette reçue pour le carton contenant les éléments de données clés requis pour le traçage crucial.

8. Processus de réception selon la revendication 1, comprenant en outre : la détermination du besoin d'entreposage frigorifique pour déterminer le procédé de stockage adapté de l'article reçu ;
lorsque la détermination peut être faite par un utilisateur ou par le programme d'application sur l'imprimante de code à barres hôte.

9. Processus de réception selon la revendication 8, dans lequel si l'article reçu ne fait pas partie de l'entreposage frigorifique, l'emballage intérieur ou le boîtier est placé dans l'entreposage à sec.

10. Processus de réception selon la revendication 9, comprenant en outre : la demande à un utilisateur de recevoir un autre boîtier.

11. Processus de réception selon la revendication 10, dans lequel en l'absence d'autre boîtier, le processus revient alors au début et recommence à zéro.

12. Processus de réception selon la revendication 10, dans lequel en l'absence d'autre boîtier, le processus est alors quitté.

13. Processus de réception selon la revendication 12, dans lequel en cas de réception d'un article d'entreposage frigorifique, il est déterminé si les articles reçus sont stockés à l'état réfrigéré ou congelé,
dans lequel le processus peut poursuivre la détermination pour savoir si davantage de boîtiers sont à recevoir.
